# DEMANDE DE BREVET EUROPEEN

(11) **EP 2 091 280 A2**
(43) Date de publication de la demande: **19.08.2009**
(21) Numéro de dépôt: 09150881.2
(22) Date de dépôt: 19.01.2009
(51) Int. Cl.: H04W 16/00

(54) **Procédé de transmission de données entre un premier et un deuxième dispositif de communication**

(30) Priorité: 22.01.2008 FR 0850390
(71) Demandeur: FRANCE TELECOM, 75015 Paris (FR)
(72) Inventeur: Penhoat, Joël, 22300, LANNION (FR); Lopez, Christian, 92320, CHATILLON (FR)

(57) **Abrégé**

L'invention concerne un procédé de transmission d'au moins un flux de données entre des premier et deuxième dispositifs (10, 112) de communication respectivement connectés à un premier point (15₁) d'accès d'un premier réseau (100) de communication et à un deuxième réseau (101) de communication.

Selon l'invention, un tel procédé comprend :
■ une étape (E1) d'obtention d'au moins une valeur calculée représentative d'un niveau de qualité d'une transmission dudit flux de données entre ledit premier dispositif (10) et ledit premier point (15₁) d'accès ;
■ une étape (E2) de comparaison de ladite valeur calculée avec une valeur prédéterminée représentative d'un niveau minimum de qualité de transmission ;
■ une étape (E3) de connexion dudit premier dispositif (10) à un point (114) d'accès disponible dudit deuxième réseau (101), dit point d'accès de basculement, destinée à être exécutée si ladite valeur calculée est inférieure à ladite valeur prédéterminée.

## Description

La présente invention concerne la communication entre terminaux appartenant à des réseaux de communication distincts, par exemple entre un terminal appartenant à un réseau de communication mobile local privé et un terminal appartenant à un réseau de communication large bande administré par un opérateur.

Plus précisément, l'invention concerne le contrôle de l'établissement d'une nouvelle communication entre de tels terminaux, en fonction du niveau de la qualité de service offert par les réseaux hébergeant ces terminaux, à un instant donné.

L'invention s'applique notamment, mais non exclusivement, à une architecture réseau du type UMA (pour "Unlicensed Mobile Access" en anglais, pour "mobile à libre accès" en français). Une telle architecture permet en effet à un usager d'utiliser son téléphone mobile sur un réseau local IP (pour "Internet Protocol" en anglais, ou "protocole Internet" en français), lorsqu'il est chez lui, au bureau ou, plus généralement, lorsqu'il se situe dans une zone couverte par un point d'accès d'un réseau IP mobile local privé, plutôt que d'utiliser le réseau fixe ou mobile payant d'un opérateur.

Une telle approche selon la norme UMA offre pour avantage de diminuer sensiblement les coûts de communication, d'autant plus pour entreprise au sein de laquelle le nombre des communications passées par ses collaborateurs est souvent important.

A titre de simple exemple illustratif et non limitatif, la mise en oeuvre d'une architecture réseau conçue selon la norme UMA permet donc de prolonger les services mobiles GSM/ GPRS dans les réseaux sans fils IP libres d'accès (Wi-Fi™ ou Bluetooth™ notamment) en créant un tunnel de communication, directement entre un terminal de communication client et le coeur du réseau de l'opérateur, dans l'objectif :
■ de permettre à l'usager d'utiliser des services mobiles voix et données par l'intermédiaire de réseaux privés en conservant le même numéro de téléphone ;
■ de supporter le passage d'un réseau privé à un réseau GSM et réciproquement, sans coupure ;
■ d'être indépendant de la technologie utilisée pour les réseaux privés, par exemple du type Wi-Fi™ ou Bluetooth™, tout en étant également transparent pour les équipements existants dans les réseaux privés ;
■ d'assurer une sécurité équivalente aux réseaux GSM.

Dans le cadre d'une architecture réseau UMA de type résidentiel (par exemple celle déployée dans le cadre de l'offre Unik - marque déposée, de l'opérateur Orange - marque déposée), lorsqu'un appel sortant est généré par un terminal de communication de type GSM/ GPRS sur le réseau Wi-fi (marque déposée), une prise de décision s'opère d'une façon relativement simple, selon des critères préalablement définis par l'opérateur de téléphonie mobile.

Dans un contexte d'utilisation impliquant une communication de données entre le terminal et un terminal serveur distant, si au moment de l'établissement de la communication, le terminal se situe dans la zone de couverture de sa passerelle de communication Wi-Fi formant point d'accès unique au réseau de l'opérateur, alors la communication Wi-fi est prolongée via le coeur de réseau de l'opérateur, jusqu'au terminal serveur distant avec lequel la communication de données doit être opérée.

Généralement, lorsqu'une architecture réseau UMA est mise en oeuvre au sein d'une entreprise, la passerelle de communication sert d'interface entre le réseau mobile local privé (de type IP, par exemple) de l'entreprise et le réseau de communication de l'opérateur.

La passerelle doit donc superviser et gérer simultanément une pluralité de points d'accès au réseau local mobile, respectivement répartis sur le site de l'entreprise et, doit en outre assurer la gestion d'un grand nombre de communications d'un parc important de terminaux de communication mobile associés aux collaborateurs de l'entreprise.

Un avantage d'une telle architecture UMA dans une entreprise résidera notamment dans la possibilité offerte aux usagers de pouvoir réaliser des communications data (ou communication de données) même en cours de déplacement du terminal mobile à l'intérieur de l'entreprise. En effet, si une communication data est établie depuis le terminal mobile d'un utilisateur, par l'intermédiaire d'un premier point d'accès Wi-fi de l'architecture UMA d'une entreprise, si le terminal se déplace en sortant de la zone de couverture de ce premier point d'accès, alors la communication data sera normalement poursuivie sans interruption de service, par l'intermédiaire d'un autre point d'accès optimal du réseau Wi-fi de l'entreprise (procédure dite de "handover" selon une dénomination anglophone communément reconnue dans le domaine de l'invention) auquel le terminal sera nouvellement rattaché.

Or, il s'avère que le nombre maximal de flux de données ("Data over IP" en anglais, ou "données sur IP" en français) que peut transmettre un réseau de communication à un moment donné, et plus particulièrement dans une architecture UMA, est un paramètre important représentatif du niveau de qualité de service (QoS) perçu par les utilisateurs.

En effet, lorsque le nombre de flux de données transitant sur le réseau à un instant donné dépasse un seuil donné, la QoS offerte aux usagers se dégrade sensiblement.

Aussi, un inconvénient d'une architecture UMA comprenant plusieurs terminaux mobiles (par exemple du type GSM, GPRS) pouvant se connecter à plusieurs points d'accès (AP) gérés par une passerelle de communication unique (dite passerelle UMA) permettant d'interfacer le réseau IP local privé de l'entreprise avec le coeur de réseau d'un opérateur, est principalement lié à la difficulté de pouvoir garantir et maintenir une QoS constante auprès des utilisateurs, notamment en cas d'afflux important de communication de flux de données à un instant ou sur une période donnée.

Aussi, un inconvénient supplémentaire d'une telle architecture UMA d'entreprise, est lié au fait qu'elle est de par sa nature prompte aux coupures de communications de données en cours à partir d'un terminal d'utilisateur, notamment en cas d'afflux simultané de communications de données, ou bien encore, en cas d'éloignement du terminal d'utilisateur d'un point d'accès au réseau privé d'entreprise (réseau Wi-fi) lorsqu'il n'est pas possible de basculer la transmission de données sur un autre point d'accès disponible du réseau mobile privé d'entreprise.

Pour résoudre les inconvénients précités les inventeurs ont proposé un procédé permettant de basculer une communication data déjà établie à partir d'un terminal initialement sous couverture Wi-fi de la partie WLAN d'une architecture réseau UMA d'entreprise, de façon automatique, sécurisée et sans interruption de service (procédure de basculement sans interruption, ou "handover" en anglais), sur un point d'accès (borne GSM/ GPRS/ UMTS) accessible du réseau WAN d'un opérateur de téléphonie mobile, et de façon transparente pour l'utilisateur du terminal.

A cet effet, l'invention concerne un procédé de transmission d'au moins un flux de données entre des premier et deuxième dispositifs de communication respectivement connectés à un premier point d'accès d'un premier réseau de communication et à un deuxième réseau de communication.

Selon l'invention, un tel procédé comprend avantageusement :
■ une étape d'obtention d'au moins une valeur calculée représentative d'un niveau de qualité d'une transmission dudit flux de données entre ledit premier dispositif et ledit premier point d'accès ;
■ une étape de comparaison de ladite valeur calculée avec une valeur prédéterminée représentative d'un niveau minimum de qualité de transmission ;
■ une étape de connexion dudit premier dispositif à un point d'accès disponible dudit deuxième réseau, dit point d'accès de basculement, destinée à être exécutée si ladite valeur calculée est inférieure à ladite valeur prédéterminée.

Ainsi, lorsque la qualité de service sur le lien de communication mobile entre le premier dispositif (un terminal de communication mobile, par exemple) et le point d'accès au premier réseau, par exemple un lien Wi-fi, se dégrade lors de la transmission d'un flux de données, de sorte à ne plus être conforme à un niveau minimum de qualité de transmission, alors le terminal prend la décision de basculer la transmission dudit flux de données, sans interruption et de façon automatique, vers un réseau WAN d'un opérateur, par exemple un réseau du type GPRS ou UMTS, en réalisant une procédure de "handover" vers ce dernier.

Une telle approche technique s'avère en outre particulièrement intéressante lorsque le premier réseau est un réseau mobile privée d'entreprise comportant une pluralité de point d'accès, par exemple du type Wi-fi, définissant une zone de couverture du réseau mobile d'entreprise, dénommée "business zone" selon une terminologie anglaise . Or, pour chacun de ces point d'accès, les ressources en matière de communication sont limitée, les communications de données voix étant en outre priorisées par rapport aux communications de données, de sortes que des transmissions de données en cours transitant par au moins un de ces point d'accès au réseau mobile privée d'une entreprise sont souvent promptes à des dégradations, voir à des coupures dans la transmission de flux de données autre que des flux de type voix.

Le procédé selon l'invention permet de palier ces inconvénients en garantissant le bon achèvement de la transmission de données entre le terminal (premier équipement) et un équipement (deuxième équipement) connecté à un deuxième réseau de communication.

Préférentiellement, le procédé selon l'invention comprend une étape de basculement de ladite transmission dudit flux de données sur ledit point d'accès disponible du deuxième réseau, si on ne peut trouver au moins un autre point d'accès accessible dudit premier réseau sur lequel basculer la transmission dudit flux de données.

Le basculement sans interruption de la transmission de données signifie ici que la transmission d'un flux de données, initialement débutée via le réseau Wi-fi de la partie WLAN d'une architecture UMA, sera nécessairement achevée après son basculement dynamique sur la partie WAN de l'architecture UMA. Ce basculement se fera de manière transparente pour un utilisateur et selon deux variantes possibles de mise en oeuvre du procédé selon l'invention : après que la transmission ait été basculée sur le réseau WAN d'un opérateur, soit l'intégralité du flux de données est retransmis pour plus de sécurité et de garantie du maintien de l'intégralité des données transmises, soit la transmission est reprise sur le réseau WAN à partir du point d'interruption de la transmission du flux de données sur la partie WLAN, un tel point d'interruption ayant été préalablement déterminé et/ou mémorisé par un dispositif d'interface reliant la partie WLAN et la partie WAN d'une architecture UMA, par exemple une LiveBox (marque déposée) d'Orange (marque déposée).

Dans un mode de réalisation préféré de l'invention, ladite étape d'obtention est une étape de détermination d'une valeur de rapport signal sur bruit propre audit premier point d'accès et en ce que ladite étape de comparaison est une étape de vérification que ladite valeur de rapport signal sur bruit n'est pas inférieure à un seuil prédéterminé de rapport de signal sur bruit représentatif dudit niveau minimum de qualité de transmission.

Un tel rapport de signal sur bruit est en effet aisé à calculer en continu, ou tout le moins à intervalles de temps réguliers, pour un point d'accès au premier réseau mobile de type Wi-fi, celui-ci se calculant comme le ratio entre le débit en Mbps (mégabits par seconde) et la fréquence de transmission établie au travers le point d'accès considéré. Le résultat d'un tel calcul du rapport signal sur bruit peut ensuite être facilement comparé avec une valeur prédéterminée représentative d'un niveau minimum de qualité de transmission requis, en dessous duquel le basculement sur un réseau GPRS ou UMTS (ou tout autre type de réseau mobile adapté pour le transport de flux de données) d'une transmission en cours sur un réseau mobile privé d'entreprise doit être initié.

Dans un mode de réalisation avantageux de l'invention, préalablement à ladite étape de basculement, ledit premier dispositif émet à destination d'un équipement d'accès sécurisé audit deuxième réseau de communication, une requête de réservation de ressources pour la transmission dudit flux de données entre ledit premier et ledit deuxième dispositif.

Le procédé selon l'invention permet ainsi de s'assurer de la disponibilité de ressources suffisantes pour assurer une transmission de qualité dudit flux de données lors du basculement de cette dernière sur un réseau WAN d'un opérateur, en lieu et place de la transmission initialement débutée par l'intermédiaire d'un réseau virtuel mobile privée d'entreprise.

De façon préférentielle, le procédé selon l'invention comprend, sur requête dudit premier dispositif, une étape d'établissement d'un canal de communication virtuel privé, de bout en bout entre ledit premier dispositif et ledit équipement sécurisé d'accès. L'équipement sécurisé d'accès est par exemple la passerelle sécurisée d'accès à un réseau mobile d'un opérateur.
L'établissement d'un tel canal permet de garantir, par l'intermédiaire de la passerelle sécurisée (la SEGW - pour « Secure Gateway ») d'accès au réseau d'opérateur, une plus grande sécurisation du canal de transmission dudit flux de données entre ledit terminal de communication (un téléphone mobile par exemple) et l'équipement serveur de données appartenant au deuxième réseau impliqué dans la transmission de données (réception/ émission).

Dans un mode de réalisation avantageux de l'invention, un tel procédé selon l'invention comprend une étape d'activation d'un pare-feu au niveau dudit premier dispositif de communication, soit au niveau d'un terminal mobile, dans le cas d'une architecture UMA, par exemple. Un tel mode de réalisation permet de protéger le terminal (premier équipement) de toute tentative d'intrusion et/ou de piratage de données stockées sur celui-ci pendant toute la durée des transmissions de données initiées entre le terminal et le deuxième équipement connecté audit deuxième réseau, par exemple un équipement serveur de données distant.

Préférentiellement, lorsque ledit flux de données est transmis par ledit deuxième dispositif à destination dudit premier dispositif, ledit procédé met en oeuvre une étape d'adaptation dudit flux de données au débit maximum dudit deuxième réseau. Cette étape d'adaptation peut s'apparenter à un lissage du flux de données transmis, c'est-à-dire à un découpage en paquets de longueur prédéterminée dudit flux de données, en tenant compte du débit maximum dudit deuxième réseau.
En effet, le deuxième réseau étant un réseau d'un opérateur, celui-ci dispose d'un débit maximum fixé par ledit opérateur pour transmettre des flux de données. Aussi, si un équipement serveur de données connecté à un tel deuxième réseau doit transmettre à destination d'un terminal mobile connecté à une borne (un point) d'accès audit deuxième réseau, un flux de donnés d'une taille de 500 Mégabits (Mkb), alors que le deuxième réseau possède un débit maximum de 100Mégabits par seconde (Mb/s), alors ladite étape d'adaptation dudit flux de données va consister à découper puis à transmettre ledit flux de données sous la forme de cinq paquets d'une taille sensiblement égale à 100 Mbits, de façon à optimiser la transmission dudit flux de données, au regard du débit maximum autorisé sur ledit deuxième réseau.

Préférentiellement, ladite étape d'adaptation est mise en oeuvre par ledit équipement sécurisé d'accès audit deuxième réseau, c'est-à-dire par la passerelle sécurisée d'accès audit deuxième réseau (le réseau WAN) d'un opérateur, laquelle est la mieux adaptée pour gérer et contrôler les différents flux de données entrants et sortants, en tenant compte des différentes ressources disponibles sur le deuxième réseau.

Préférentiellement, ledit premier équipement étant un terminal de communication mobile conforme au standard UMA, ledit flux de données transmis entre ledit terminal et ledit équipement du deuxième réseau est un flux de données au format UMA.

Le procédé selon l'invention s'applique en effet avantageusement, mais non exclusivement, à une architecture réseau du type UMA (pour "Unlicensed Mobile Access" en anglais, pour "mobile à libre accès" en français). Une telle architecture permet en effet à un usager d'utiliser son téléphone mobile sur un réseau local IP (pour "Internet Protocol" en anglais, ou "protocole Internet" en français), lorsqu'il est chez lui, au bureau ou, plus généralement, lorsqu'il se situe dans une zone couverte par un point d'accès d'un réseau IP mobile local privé, plutôt que d'utiliser le réseau fixe ou mobile payant d'un opérateur.

Une telle approche selon la norme UMA offre pour avantage de diminuer sensiblement les coûts de communication, d'autant plus pour entreprise au sein de laquelle le nombre des communications passées par ses collaborateurs est souvent important.

De plus, le procédé de transmission selon l'invention fait bénéficier à une telle architecture UMA d'une procédure de "handover" entre un premier réseau de type Wi-Fi d'entreprise et un deuxième réseau d'un opérateur, par exemple du type GPRS/UMTS (ou tout autre réseau adapté pour la transmission de données (multimédia par exemple)), dans le cadre d'une transmission de données, alors qu'avant l'invention, il n'était possible de bénéficier dans une telle architecture UMA que de procédures de "handover" dans le cadre de communications voix entre un réseau Wi-fi et un réseau GSM d'un opérateur, par exemple.

A titre de simple exemple illustratif et non limitatif, la mise en oeuvre d'une architecture réseau conçue selon la norme UMA permet donc de prolonger les services mobiles GSM/ GPRS dans les réseaux sans fils IP libres d'accès (Wi-Fi™ ou Bluetooth™ notamment) en créant un tunnel de communication, directement entre un terminal de communication client et le coeur du réseau de l'opérateur, soit par l'intermédiaire du dispositif d'interface reliant le réseau Wi-fi au réseau GPRS/ UMTS, soit par l'établissement d'un canal virtuel de transmission dudit flux de données entre le terminal et l'équipement serveur de données connecté au réseau WAN, ledit canal étant établi entre le terminal et la passerelle sécurisée d'accès au réseau WAN, ceci dans l'objectif :
■ de permettre à l'usager d'utiliser des services mobiles voix et données par l'intermédiaire de réseaux privés en conservant le même numéro de téléphone ;
■ de supporter le passage d'un réseau privé à un réseau GSM et réciproquement, sans coupure ;
■ d'être indépendant de la technologie utilisée pour les réseaux privés, par exemple du type Wi-Fi™ ou Bluetooth™, tout en étant également transparent pour les équipements existants dans les réseaux privés ;
■ d'assurer une sécurité équivalente aux réseaux GSM.

L'invention vise aussi un produit programme d'ordinateur téléchargeable depuis un réseau de communication et/ou stocké sur un support d'information lisible par ordinateur et/ou exécutable par un microprocesseur, **caractérisé en ce qu**'il comprend des instructions de code pour l'exécution d'un procédé de transmission de flux de données, conforme au procédé de transmission précité, lorsqu'il est exécuté par un terminal d'ordinateur.

Dans un mode de réalisation préféré de l'invention, un tel produit programme d'ordinateur sera exécuté par un terminal de communication de type téléphone mobile conforme à la norme UMA, de façon qu'un tel terminal, dans une architecture UMA, puisse prendre la décision, de manière autonome et transparente pour son utilisateur, de réaliser une procédure de "handover" telle que définie par le procédé de transmission selon l'invention, lors d'une transmission d'un flux de données (autres que de données voix) initialement débuté sur la partie WLAN (réseau i-fi par exemple) d'une architecture réseau de type UMA.

L'invention concerne également un système de transmission d'au moins un flux de données entre des premier et deuxième dispositifs de communication respectivement connectés à un premier point d'accès d'un premier réseau de communication et à un deuxième réseau de communication.

Selon l'invention, un tel système comprend :
■ des moyens d'obtention d'au moins une valeur calculée représentative d'un niveau de qualité d'une transmission dudit flux de données entre ledit premier dispositif et ledit premier point d'accès ;
■ des moyens de comparaison de ladite valeur calculée avec une valeur prédéterminée représentative d'un niveau minimum de qualité de transmission ;
■ des moyens de connexion dudit premier dispositif à un point d'accès disponible dudit deuxième réseau, dit point d'accès de basculement, destinée à être exécutée si ladite valeur calculée est inférieure à ladite valeur prédéterminée.

Préférentiellement, un tel système comprend des moyens de basculement de ladite transmission dudit flux de données sur ledit point d'accès disponible du deuxième réseau, si on ne peut trouver au moins un autre point d'accès accessible dudit premier réseau sur lequel basculer la transmission dudit flux de données.

Dans un mode de réalisation préféré de l'invention, lesdits premier et deuxième réseaux étant respectivement un réseau sans fil Wi-fi d'entreprise du type LAN et un réseau sans fil d'un opérateur du type WAN reliés ensemble par un dispositif d'interface, ledit premier dispositif de communication est un terminal de communication mobile conforme à la norme UMA comprenant des moyens pour se connecter à l'un ou l'autre desdits premier et deuxième réseaux.

Un tel système est donc particulièrement bien adapté pour garantir un niveau qualité de service lors d'une transmission de flux de données autre que de données voix, dans une architecture de type UMA.

Les caractéristiques et avantages techniques de la présente invention ressortiront mieux de la description suivante, faite à titre indicatif et non limitatif, au regard des dessins annexés sur lesquels :

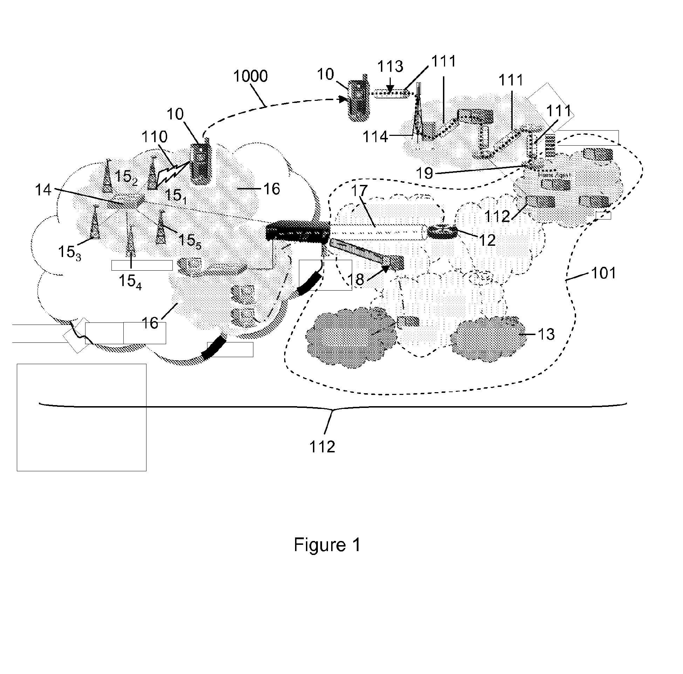

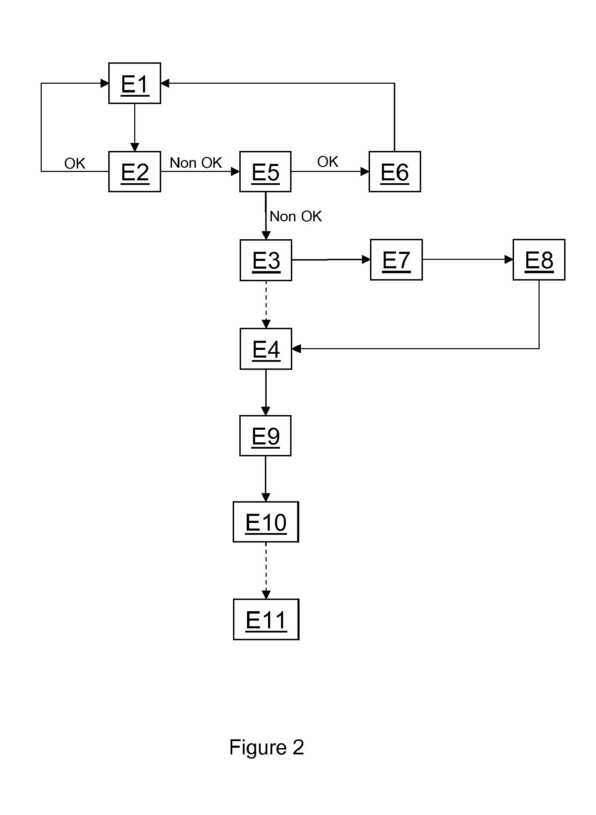

Les caractéristiques et avantages techniques de la présente invention ressortiront mieux de la description suivante, faite à titre indicatif et non limitatif, au regard des dessins annexés sur lesquels :
■ la figure 1 est une vue schématique d'une architecture dans laquelle sont mis en oeuvre un système et un procédé de transmission de données autres que du type voix selon l'invention ;
■ la figure 2 est un ordinogramme résumant les grandes étapes du procédé de transmission selon l'invention.

La présente invention propose donc une solution qui permet, dans une architecture réseau du type UMA, de réaliser une procédure de "handover", c'est-à-dire de basculement sans interruption d'une transmission d'un flux de données autre que du type voix, alors que jusqu'à présent, il n'était possible, selon les inventeurs, que de bénéficier d'une telle procédure de "handover" entre un premier réseau de type Wi-Fi et un deuxième réseau d'un opérateur, que pour des communications de type voix.

La figure 1 illustre une architecture 102 réseau du type UMA dans laquelle l'invention peut être mise en oeuvre.
Une telle architecture 102 comprend une première partie 100 correspondant à un premier réseau de communication local sans fil, dit réseau WLAN, par exemple du type réseau IP mobile local privé d'une entreprise et, une deuxième partie 101, correspondant à la partie coeur de réseau, du réseau WAN d'un opérateur, par exemple celui de l'opérateur Orange (marque déposée).

Un équipement matériel 11 formant dispositif d'interface permet donc de prolonger les services de communication entre le réseau 100 WLAN et le réseau 101 WAN, notamment pour ce qui concerne les communications voix établies entre des terminaux de radiocommunication du réseau WLAN et des terminaux de communication distant définissant un environnement 13 de e-téléphonie, atteint par l'intermédiaire d'au moins un équipement 12 de collecte et/ou de routage, et/ou d'au moins une passerelle sécurisé, du réseau WAN.

Le réseau 100 WLAN comprend une pluralité de points 15₁, 15₂, 15₃, 15₄, 15₅ d'accès reliés au dispositif 11 d'interface par l'intermédiaire d'un commutateur 14 de type Ethernet, l'ensemble des points d'accès, y compris le dispositif 11 d'interface, définissant une zone 16 de couverture (dite "business zone" selon la terminologie anglophone communément adoptée) pour le réseau 100 IP local mobile, au sein de laquelle le terminal 10 de communication est reconnu.

Le terminal 10 est conforme à la norme UMA (Technical Specification Group GSM/EDGE Radio Access Network; Generic Access to the A/Gb interface; Stage 2 - version 6- janvier 2006) et la "business zone" 16 est conforme à la norme WMM (WMM™ - Version 1.1 - Wi-Fi Alliance Technical Committee Quality of Service Task Group).

La "Business Zone" 16 possède un serveur DHCP situé sur le dispositif 11 d'interface. Le dispositif 11 d'interface effectue du NAT (1 vers N) sur son interface WAN.

L'adresse IP source d'un paquet IPsec (sécurisé) transmis par un terminal 10 UMA à destination d'une passerelle sécurisée 110 du réseau 11 WAN, provient de la plage d'adresses IP administré par le serveur DHCP de la "Business Zone" 19.

Un canal 17 virtuel conversationnel (CV) de communication peut être établi sur la partie 101 WAN de l'architecture UMA, entre le dispositif 11 d'interface et un équipement 18 de collecte et de routage du réseau 101 WAN, ce dernier formant point d'entrée du point de présence (PoP) multiservices, dont le service de voix sur IP.

On présente ci-dessous et au regard de la figure 1 le principe de mise en oeuvre d'un canal de communication sécurisé (VPN pour "Virtual Private Network" en anglais ou "réseau de communication privé", en français) pour la transmission des flux de données, ou flux data, entre un terminal 10 de communication mobile, par exemple un téléphone mobile, et la passerelle 19 sécurisée SEGW (pour " Secure Gateway" en anglais) d'un réseau GPRS ou UMTS d'un opérateur (ou tout autre réseau de communication mobile adapté pour la transmission de flux de données autres que du type voix) lors d'une procédure de basculement sans interruption, dite procédure de "handover" entre un réseau 100 LAN (pour "Local Area Network" en anglais), par exemple un réseau virtuel mobile privée d'entreprise, du type Wi-fi, et un réseau 101 WAN (pour "Wide Area Network" en anglais) d'un opérateur de communications mobiles.

Ainsi, lorsque la qualité la transmission de données voix sur le lien 110 Wi-Fi entre le terminal 10 et un point 15₁ du réseau Wi-fi d'accès diminue en-dessous d'un certain seuil, le terminal 10 prend la décision de déclencher une procédure de basculement (« handover ») vers le réseau 101 GPRS/UMTS. Une telle dégradation de la qualité de transmission peut par exemple provenir d'un déplacement 1000 du terminal 10 impliquant un éloignement soudain dudit terminal à une distance du point d'accès 15₁ du réseau Wi-fi sur lequel il était connecté, ne permettant plus d'assurer une transmission de qualité minimale prédéterminée, et voir même susceptible de provoquer une rupture intempestive de la transmission de données en cours.

Lorsque la connexion au réseau 101 GPRS/UMTS est réalisée, le terminal 10 établit un canal 111 virtuel privé (ou "VPN" pour "Virtual Private Network" en anglais) de type L2TP/IPsec, de bout en bout entre lui-même 10 et la passerelle 19 sécurisée (SEGW) d'accès au réseau 101 d'opérateur.

L'établissement du canal 111 virtuel privé entre le terminal 10 et la passerelle 19 (par exemple un serveur VPN) se fait donc à l'initiative du terminal 10, lorsque ce dernier détecte que la qualité de la transmission de données en cours se dégrade au point de descendre au-dessous d'un seuil de niveau de qualité de transmission prédéterminé.

Dans un mode de réalisation préféré et non limitatif de l'invention, le terminal 10 calcule ou obtient, en continu ou tout le moins à intervalle de temps réguliers, la valeur de rapport signal sur bruit (RSB ou RNS en anglais) relatif propre au point d'accès 15₁ du réseau Wi-fi sur lequel il est connecté et au travers duquel s'effectue la transmission de données en cours.

Le rapport signal sur bruit désigne en effet la qualité d'une transmission d'information par rapport aux parasites qui peuvent provoquer une dégradation de cette dernière.

Si par exemple le réseau 100 Wi-fi d'entreprise conforme au standard 802.11a offre un débit de 54 Mb/s et que la transmission s'effectue à une fréquence de 20 MHz, alors le rapport signal sur bruit aura pour valeur 54/20 = 2,7.

Dans le cadre du procédé selon l'invention, il est déterminé que lorsque la valeur du signal sur bruit calculée est telle que si RSB < 7, alors un nouveau point d'accès au réseau Wi-fi à la fois disponible et offrant le niveau de qualité requis est recherché. Si un tel autre point d'accès distinct du point 15₁ d'accès courant peut être trouvé dans le réseau WLAN, alors la transmission du flux de données est automatiquement basculée sur cet autre point d'accès au réseau Wi-fi, ce qui permet de maintenir le coût faible de la transmission.

Dans le cas contraire, le terminal 10 déclenche la procédure de "handover" sur le réseau 101 GPRS/ UMTS de l'opérateur de la transmission de données en cours.

Plus précisément, lorsque les paramètres de la qualité de transmission Wi-fi descendent en-dessous d'un certain seuil prédéterminé, la couche MAC 802.11 du terminal 10 génère un message Link_Parameters_Change indication à destination de la couche MIH :
■ l'adresse MAC de l'interface 11;
■ les paramètres de la qualité de transmission Wi-fi ayant dépassés un certain seuil, par exemple un rapport signal à bruit ;
■ des anciennes valeurs des paramètres de la qualité de transmission Wi-fi avant le dépassement des seuils ;
■ des nouvelles valeurs des paramètres de la qualité de transmission Wi-fi après le dépassement des seuils.

La fonction MIH (abrégée officiellement par MIHF) est chargée de collecter la totalité des messages des services MIH envoyés par les entités intervenant dans l'architecture UMA. Cette fonction encapsule les données dans des trames MIHF avant de les envoyer sur le lien physique. Aussi, la fonction MIHF permet de transmettre les informations et les évènements au gestionnaire de "handover", à savoir le terminal 10 dans le cas de la présente invention, le terminal 10 étant apte à déclencher la procédure de « handover » d'une transmission en cours sur le réseau Wi-fi, vers un réseau GPRS/UMTS d'un opérateur, de manière autonome et transparente pour l'utilisateur dudit terminal 10.

A la réception d'un message du type « Link_Parameters_Change indication », la couche MIH du terminal 10 génère un message du type « MIH_Link_Parameters_Report indication » à destination du moteur de gestion des "handovers" (« Handover Policy engine » en anglais) contenu dans le terminal 10 (un téléphone mobile d'un utilisateur conforme au standard UMA, par exemple), message contenant :
■ l'adresse MAC de l'interface Wi-Fi ;
■ un identifiant de l'interface 11 ayant transmis les paramètres de transmission Wi-Fi ;
■ les paramètres de la qualité de transmission Wi-Fi ayant dépassés un certain seuil ;
■ les anciennes valeurs des paramètres de la qualité de transmission Wi-Fi avant le dépassement des seuils ;
■ les nouvelles valeurs des paramètres de la qualité de transmission Wi-Fi après le dépassement des seuils.

A la réception du message de type « MIH_Link_Parameters_Report indication », le moteur de gestion des "handovers" (« Handover Policy engine ») du terminal 10 consulte une base de données contenant les réseaux et leurs caractéristiques sur lesquels le terminal pourra se connecter.

La base de données est localisée dans le dispositif d'interface 11, par exemple un terminal Livebox (marque déposée) de l'opérateur Orange (marque déposée).

Le moteur de gestion des "handovers" du terminal 10 récupère cette base après que le terminal 10 ait obtenu une adresse IP au serveur DHCP rattaché au dispositif d'interface 11. Pour cela le moteur de gestion des "handover" du terminal transmet un message de type « MIH_Get_Information request » à destination du dispositif d'interface. Ce dernier 11 transmet un message du type « MIH_Get_Information response » contenant la base de données et ses informations.

La base de données contient les items suivants :
■ une liste des réseaux sur lesquels le terminal 10 peut se connecter ;
■ le nom des opérateurs administrant ces réseaux ;
■ la localisation des points d'accès ;
■ les fonctions de "roaming" (ou d'itinérance) autorisés, lesquelles définissent la capacité du terminal à maintenir une communication lors d'un changement de cellule dans un réseau cellulaire;
■ les protocoles de sécurités implémentés par les points d'accès (PoA, pour Point of Access » en anglais) ;
■ les protocoles de QoS implémentés par les PoA ;
■ les fonctions offertes par le PoA ;
■ la présence d'un service VPN ;
■ les services offerts;
■ le prix de services.

Après consultation de la base de données, le moteur de gestion des "handovers" du terminal 10 demande la topologie des réseaux Wi-Fi de la Business Zone 16 pour connaître les points d'accès 15₁ à 15₅ sur lesquels le terminal 10 pourrait se connecter.

Pour cela le moteur de gestion des handover (« Handover Policy engine « ) du terminal 10 transmet un message de type « MIH_Scan request » à destination de sa couche MIH.

A la réception du message de type « MIH_Scan request », la couche MIH demande la topologie des réseaux Wi-Fi de la Business Zone 16 à la couche MAC 802.11.

Le terminal 10 établit la topologie des réseaux Wi-Fi de la Business Zone 16 par le protocole 802.11k.

Le terminal 10 transmet au moteur de gestion des handovers du terminal 10 la topologie des réseaux Wi-Fi de la Business Zone 16 dans un message du type « MIH_Scan response ».

Si aucun réseau Wi-Fi de la Business Zone 16 n'est présent au voisinage du terminal 10, le moteur de gestion des handovers transmet à la couche MIH du terminal un message de type « MIH_Handover_Initiate request ».

Le champ de type « CurrentLinkIdentifier » du message contient l'identifiant de l'interface Up ("User Priority" pour priorité d'utilisateur) du terminal.

Le champ « SuggestedNewLinkIdentifier » contient la liste des réseaux UTRAN/GERAN (« Universal Terrestrial Radio Access Network » / «GSM EDGE Radio Access Network ») d'opérateurs, sur lesquels le terminal est autorisé à se connecter.

Le champ « HandoverMode » contient l'information « Break-before-Make » indiquant la coupure de la transmission courante du flux de données initialement débutée sur le réseau Wi-fi, avant son basculement sur le réseau GPRS/ UMTS ... d'opérateur.

A la réception du message de type « MIH_Handover_Initiate request », la couche MIH du terminal demande à l'interface Up ("User Priority") du terminal de transmettre un message de type « GA-PSR HANDOVER INFORMATION » à destination du GANC 112 (« Generic Access Network Controller » en anglais ou « contrôleur d'accès générique à un réseau » en français) du réseau de l'opérateur.

Ce message contient la liste des réseaux UTRAN/GERAN autorisés à recevoir la transmission du ou des flux de données considérés.

Après avoir réservé les ressources radio nécessaires à la bonne transmission du ou des flux de données considérés sur le réseau d'opérateur, le GANC 112 transmet sur l'interface Up ("User Priority") du terminal 10 un message de type « GA-PSR HANDOVER COMMAND » pour autoriser le terminal 10 à faire initier la procédure de « handover » vers le réseau UTRAN/GERAN. Puis le GANC 112 interrompt le flux data descendant.

A la réception du message de type « GA-PSR HANDOVER COMMAND », l'interface Up du terminal génère un message de type « Link_Down indication destination » de la couche MIH du terminal 10.

Le champ « ReasonCode » du message a pour type « RC_VENDOR_SPECIFIC ».

La valeur du type, codée sur un octet, est « GA-PSR HANDOVER COMMAND ».

La réception par la couche MIH du terminal 10 du message de type « Link_Down indication » déclenche l'établissement du canal 111 sécurisé de communication virtuel privé (VPN) pour laisser passer le flux de données entre le terminal 10 et la passerelle 19 sécurisée du réseau d'opérateur. Le flux 113 de données est ensuite géré par le réseau d'opérateur pour ce qui concerne sa transmission entre la passerelle 19 sécurisée e le serveur de contenus avec lequel le terminal 10 avait initialement initié la transmission via le réseau Wi-fi.

Puis le terminal émet un message de type « SYNC_UL » sur son interface « Uu ».

La réception par la couche 802.21 du message de type « Link Down » déclenche l'établissement du VPN selon le script décrit ci-dessous :
■ établissement d'une connexion L2TP ("Layer 2 Tunneling Protocol" en anglais) avec le routeur 19 d'accès au réseau d'opérateur ;
■ activation d'un pare-feu (« firewall ») sur le terminal ;
■ Activation du protocole « Mobile IP », protocole IETF gérant la mobilité au niveau IP d'une station ;
■ mise en oeuvre sur le routeur d'accès du réseau d'opérateur d'une méthode de lissage des flux dans le sens descendant (« downlink ») (routeur 19 d'accès vers terminal 10)

L'établissement du VPN 111 se fait selon une méthode conforme au script donné à titre d'exemple illustratif et fourni en annexe 1.
La figure 2 résume les grandes étapes du procédé de transmission selon l'invention, à savoir :
■ E1 : une étape d'obtention d'au moins une valeur calculée représentative d'un niveau de qualité d'une transmission dudit flux de données entre ledit premier dispositif 10 et ledit premier point 15₁ d'accès ;
■ E2 : une étape de comparaison de ladite valeur calculée avec une valeur prédéterminée représentative d'un niveau minimum de qualité de transmission ;
■ E3 : une étape de connexion dudit premier dispositif 10 à un point 114 d'accès disponible dudit deuxième réseau 101, dit point d'accès de basculement, destinée à être exécutée si ladite valeur calculée est inférieure à ladite valeur prédéterminée ;
■ E4 : une étape de basculement de ladite transmission dudit flux de données sur ledit point 114 d'accès disponible du deuxième réseau 101, si on ne peut trouver E5 au moins un autre point (15₂ à 15₅) d'accès accessible dudit premier réseau 100 sur lequel basculer E6 la transmission dudit flux de données;
■ préalablement à ladite étape E4 de basculement, ledit premier dispositif émet E7 à destination d'un équipement d'accès sécurisé audit deuxième réseau de communication, une requête de réservation E8 de ressources pour la transmission dudit flux de données entre ledit premier 10 et ledit deuxième dispositif 19 ;
■ sur requête dudit premier dispositif, une étape E9 d'établissement d'un canal 111 de communication virtuel privé, de bout en bout entre ledit premier 10 dispositif et ledit équipement 19 sécurisé d'accès ;
■ E 10 : une étape d'activation d'un pare-feu au niveau dudit premier dispositif 10 de communication ;
■ lorsque ledit flux de données est transmis par ledit deuxième dispositif 19 à destination dudit premier dispositif 10, une étape E11 d'adaptation dudit flux de données au débit maximum dudit deuxième réseau 101.

### Annexe 1

#!/bin/bash
#VPN server
   PPTP_REMOTE_IP="161.106.226.186"
#ppp options
   PPP_OPTIONS="/etc/ppp/options.pptp"
#UMTS gateway
   GATEWAY_OPERATOR_NET="10.64.64.64"
#Client's interfaces
   LOOPBACK="lo"
   SIT0_INTERFACE="sit0"
   WIFI0_INTERFACE="wifi0"
   IP6TNL0="ip6tnl0"
   ETHERNET_INTERFACE="eth0"
   WIRELESS_INTERFACE="ath0"
   PPP_INTERFACE_ OPERATOR_NET="ppp0"
   PPP_INTERFACE_VPN_NET="ppp1"
   MIPv6_SIT_NAME="sit3"
   HOMEDEV="mip6mnha1"
#MobileIPv6
   MIPv6_MODULE="mip6_mn"
#Timer (the value is slightly greater than the RTT between the client and the server)
   SLEEP_PPP="1"
   SLEEP_PPTP="1"
   WAIT_FOR_IPv4_ADDRESS="1"
   WAIT_FOR_MIPv6="1"
   VPN_IS_ALIVE="3"
#Business Zone's VPN QoS
   INTERVAL_TO_SEND_PING="2"
   MEASUREMENT_PERIOD="60"
   VPN_PATH_QUALITY="100"
   PPP_CONNECTION_IS_ALIVE="10"
function ctrl_c_handler() {
   $0 stop
   exit 0
   }
case "$1" in
   start)
#CTRL C gives signal 2
   trap 'ctrl_c_handler' 2
#Stop Mobile IPv6
   /sbin/lsmod | grep $MIPv6_MODULE > /dev/null
   if [ 'echo $?' = 0 ] ; then
   /etc/init.d/mobile-ip6 stop > /dev/null
   fi
#Connect to OPERATOR network
   echo -n "Connected to OPERATOR UMTS network ? ... "
   ps -auxww | grep pppd | egrep -v grep > /dev/null
   if [ 'echo $?' = 0 ] ; then
   echo "yes."
   else
   echo -n "please wait ... "
   /usr/sbin/pppd call ppp > /dev/null 2>&1
   sleep $SLEEP_PPP
   echo -e "[ \\033[1;32mconnected\\033[0;39m ]"
   fi
#Waiting for a public @IPv4 given by OPERATOR's GGSN
   /sbin/ip addr | grep 'peer ' | grep $PPP_INTERFACE_OPEPATOR_NET
   > /dev/null
while [ 'echo $?' != 0 ] ; do sleep $WAIT_FOR_IPv4_ADDRESS ; /sbin/ip addr | grep 'peer ' | grep $PPP_INTERFACE_OPERATOR_NET > /dev/null ; done
#Create the PPTP VPN
   echo -n "Creating a route to the Business Zone's VPN server ...
   " /sbin/route add $PPTP_REMOTE_IP gw $GATEWAY_OPERATOR_NET > /dev/null 2>&1
   /usr/sbin/pppd file $PPP_OPTIONS pty "/usr/sbin/pptp
   $PPTP_REMOTE_IP --nolaunchpppd" > /dev/null 2>&1
   sleep $SLEEP_PPTP
   echo -n "and waiting for a private @IPv4 given by the Business Zone ... "
   /sbin/ip addr | grep 'peer ' | grep $PPP_INTERFACE_VPN_NET > /dev/null
   while [ 'echo $?' != 0 ] ; do sleep $WAIT_FOR_IPv4_ADDRESS ; /sbin/ip addr | grep 'peer ' | grep $PPP_INTERFACE_VPN_NET > /dev/null ; done
   LINE="$(/sbin/ip addr | grep 'peer ' | grep
   $PPP_INTERFACE_VPN_NET)"
   echo
#Store PPTP local and remote IPv4 addresses
   LOCAL_IPv4="$(echo $LINE | awk '{print $2}')"
   REMOTE_IPv4_AND_MASK="$(echo $LINE | awk '{print $4}')"
   REMOTE_IPv4="$(echo $REMOTE_IPv4_AND_MASK | cut -f 1 -d /)"
   echo "local VPN IPv4 = $LOCAL_IPv4 remote VPN IPv4 = $REMOTE_IPv4"
#Set up the firewall
   /sbin/iptables -F > /dev/null
   /sbin/iptables -A INPUT -i $LOOPBACK -j ACCEPT
   /sbin/iptables -A INPUT -i $SIT0_INTERFACE -j ACCEPT
   /sbin/iptables -A INPUT -i $WIFI0_INTERFACE -j ACCEPT
   /sbin/iptables -A INPUT -i $WIRELESS_INTERFACE -j ACCEPT
   /sbin/iptables -A INPUT -i $ETHERNET_INTERFACE -p all -s
$PPTP_REMOTE_IP -j ACCEPT
   /sbin/iptables -A INPUT -i $PPP_INTERFACE_OPERATOR_NET -j ACCEPT
   /sbin/iptables -A INPUT -i $PPP_INTERFACE_VPN_NET -p all -s
$REMOTE_IPv4_AND_MASK -j ACCEPT
   /sbin/iptables -P INPUT DROP
#Create a sit tunnel
   echo -n "Establishing the Business Zone's VPN, please wait ... "
   /sbin/ip tunnel add $MIPv6_SIT_NAME mode sit remote $REMOTE_IPv4 local $LOCAL_IPv4 dev $PPP_INTERFACE_VPN_NET
   /sbin/ip link set dev $MIPv6_SIT_NAME up
   echo -e "[ \\033[1;32mOK\\033[0;39m ]"
   /sbin/iptables -A INPUT -i $MIPv6_SIT_NAME -j ACCEPT
#Start Mobile IPv6 and check if the sit tunnel is correctly binded
   echo -n "Start Mobile IPv6 ... "
   /etc/init.d/mobile-ip6 start > /dev/null
   sleep $WAIT_FOR_MIPv6
   INTERFACE_NAME="$(/sbin/ip addr | grep $HOMEDEV | awk '{print
   $2}' | cut -f 1 -d : | awk -F @ '{print $2}')"
   while [ $INTERFACE_NAME != $MIPv6_SIT_NAME ] ; do
   /etc/init.d/mobile-ip6 restart > /dev/null ; sleep $WAIT_FOR_MIPv6 \
   ; INTERFACE_NAME="$(/sbin/ip addr | grep $HOMEDEV | awk '{print
   $2}' | cut -f 1 -d : | awk -F @ '{print $2}')" ; done
   /sbin/iptables -A INPUT -i $HOMEDEV -j ACCEPT
   /sbin/iptables -A INPUT -i $IP6TNL0 -j ACCEPT
#Setting interfaces priorities to make the network's decision
   echo -n "and set the interfaces priorities to make the network's decision ... "
   /sbin/mipdiag -i $MIPv6_SIT_NAME -P15
   /sbin/mipdiag -i $ETHERNET_INTERFACE -P10
   /sbin/mipdiag -i $WIRELESS_INTERFACE -P5
   /sbin/mipdiag -i $WIFIO_INTERFACE -P0
   /sbin/mipdiag -i $PPP_INTERFACE_OPERATOR_NET -P0
   /sbin/mipdiag -i $PPP_INTERFACE_VPN_NET -P0
   echo -e "[ \\033[1;32mOK\\033[0;39m ]"
   exit 0
   ;;
   stop)
   echo
   /sbin/ip addr | grep $MIPv6_SIT_NAME > /dev/null
   if [ 'echo $?' = 0 ] ; then
   echo -n "Removing the VPN ... "
   /sbin/ip link set dev $MIPv6_SIT_NAME down
   /sbin/ip tunnel del $MIPv6_SIT_NAME
   echo "OK"
   else
   echo "When we begin to remove the $MIPv6_SIT_NAME tunnel,
   it was not established."
   fi
   /sbin/ip addr | grep 'peer ' | grep $PPP_INTERFACE_OPERATOR_NET
   > /dev/null
   if [ 'echo $?' = 0 ] ; then
   echo -n "Shutting down the connection with OPERATOR UMTS
   network ... "
   /usr/bin/killall pppd > /dev/null 2>&1
   if [ 'echo $?' = 0 ] ; then
   sleep $SLEEP_PPP
   echo -n "OK. Check if the
   $PPP_INTERFACE_OPERATOR_NET interface is removed ... "
   /sbin/ip addr | grep $PPP_INTERFACE_OPERATOR_NET >
   /dev/null
   if [ 'echo $?' != 0 ] ; then
   echo "yes."
   else
   echo "The interface still exists. Check
   manually."
   fi
   else
   echo "We can't stop pppd and the
   $PPP_INTERFACE_OPERATOR_NET interface exists. Check manually."
   fi
   else
   echo "When we begin to remove the
   $PPP_INTERFACE_OPERATOR_NET interface, it was not established. Check
   manually."
   fi
   /sbin/lsmod | grep $MIPv6_MODULE > /dev/null
   if [ 'echo $?' = 0 ] ; then
   echo -n "Stopping Mobile IPv6 ... "
   /etc/init.d/mobile-ip6 stop > /dev/null
   echo "OK"
   fi
#Reset the firewall rules
   /sbin/iptables -F > /dev/null
   /sbin/iptables -P INPUT ACCEPT > /dev/null
   ;;
   *)
   echo "Usage: $0 {start|stop}"
   exit 1
   ;;
   esac
   exit 0

## Revendications

1. Procédé de transmission d'au moins un flux de données entre des premier et deuxième dispositifs (10, 112) de communication respectivement connectés à un premier point (15₁) d'accès d'un premier réseau (100) de communication et à un deuxième réseau (101) de communication,
**caractérisé en ce qu'**il comprend :
■ une étape (E1) d'obtention d'au moins une valeur calculée représentative d'un niveau de qualité d'une transmission dudit flux de données entre ledit premier dispositif (10) et ledit premier point (15₁) d'accès ;
■ une étape (E2) de comparaison de ladite valeur calculée avec une valeur prédéterminée représentative d'un niveau minimum de qualité de transmission ;
■ une étape (E3) de connexion dudit premier dispositif (10) à un point (114) d'accès disponible dudit deuxième réseau (101), dit point d'accès de basculement, destinée à être exécutée si ladite valeur calculée est inférieure à ladite valeur prédéterminée.

2. Procédé selon la revendication 1, **caractérisé en ce qu'**il comprend une étape (E4) de basculement de ladite transmission dudit flux de données sur ledit point (114) d'accès disponible du deuxième réseau (101), si on ne peut trouver (E5) au moins un autre point d'accès accessible dudit premier réseau (100) sur lequel basculer (E6) la transmission dudit flux de données.

3. Procédé selon l'une quelconque des revendications 1 et 2, **caractérisé en ce que** ladite étape (E1) d'obtention est une étape de détermination d'une valeur de rapport signal sur bruit propre audit premier point (15₁) d'accès et **en ce que** ladite étape (E2) de comparaison est une étape de vérification que ladite valeur de rapport signal sur bruit n'est pas inférieure à un seuil prédéterminé de rapport de signal sur bruit représentatif dudit niveau minimum de qualité de transmission.

4. Procédé selon l'une quelconque des revendications 2 et 3, **caractérisé en ce que** préalablement à ladite étape de basculement, ledit premier dispositif (10) émet (E7) à destination d'un équipement (19) d'accès sécurisé audit deuxième réseau (101) de communication, une requête de réservation (E8) de ressources pour la transmission dudit flux de données entre ledit premier (10) et ledit deuxième (112) dispositif.

5. Procédé selon la revendication 4, **caractérisé en ce qu'**il comprend, sur requête dudit premier dispositif (10), une étape (E9) d'établissement d'un canal (111) de communication virtuel privé, de bout en bout entre ledit premier dispositif (10) et ledit équipement (19) sécurisé d'accès.

6. Procédé selon la revendication 5, **caractérisé en ce qu'**il comprend une étape (E10) d'activation d'un pare-feu au niveau dudit premier dispositif (10) de communication.

7. Procédé selon l'une quelconque des revendications 4 à 6, **caractérisé en ce que** lorsque ledit flux de données est transmis par ledit deuxième dispositif (112) à destination dudit premier dispositif (10), ledit procédé met en oeuvre une étape (E11) d'adaptation dudit flux de données au débit maximum dudit deuxième réseau (101).

8. Procédé selon la revendication 7, **caractérisé en ce que** ladite étape (E11) d'adaptation est mise en oeuvre par ledit équipement (19) sécurisé d'accès audit deuxième réseau (101).

9. Produit programme d'ordinateur téléchargeable depuis un réseau de communication et/ou stocké sur un support d'information lisible par ordinateur et/ou exécutable par un microprocesseur, **caractérisé en ce qu'**il comprend des instructions de code pour l'exécution d'un procédé de transmission de flux de données, conforme à l'une quelconque des revendications 1 à 8, lorsqu'il est exécuté par un terminal d'ordinateur.

10. Système de transmission d'au moins un flux de données entre des premier et deuxième dispositifs de communication respectivement connectés à un premier point d'accès d'un premier réseau de communication et à un deuxième réseau de communication,
**caractérisé en ce qu'**il comprend :
■ des moyens d'obtention d'au moins une valeur calculée représentative d'un niveau de qualité d'une transmission dudit flux de données entre ledit premier dispositif et ledit premier point d'accès ;
■ des moyens de comparaison de ladite valeur calculée avec une valeur prédéterminée représentative d'un niveau minimum de qualité de transmission ;
■ des moyens de connexion dudit premier dispositif à un point d'accès disponible dudit deuxième réseau, dit point d'accès de basculement, destinée à être exécutée si ladite valeur calculée est inférieure à ladite valeur prédéterminée.

11. Système selon la revendication 10, **caractérisé en ce qu'**il comprend des moyens de basculement de ladite transmission dudit flux de données sur ledit point d'accès disponible du deuxième réseau, si on ne peut trouver au moins un autre point d'accès accessible dudit premier réseau sur lequel basculer la transmission dudit flux de données.
